(19) Europäisches Patentamt / European Patent Office / Office européen des brevets

(11) **EP 1 223 748 B1**

(12) **EUROPEAN PATENT SPECIFICATION**

(45) Date of publication and mention
of the grant of the patent:
**27.07.2011  Bulletin 2011/30**

(51) Int Cl.:
**H04N 5/14** (2006.01)

(21) Application number: **01310690.1**

(22) Date of filing: **20.12.2001**

(54) **Motion detection in an interlaced video signal**

Bewegungsdetektion in einem Videosignal mit Zeilensprung

Détection de mouvement dans un signal vidéo entrelacé

(84) Designated Contracting States:
**DE FR GB**

(30) Priority: **20.12.2000  US 257338**
**20.12.2000  US 257365**
**02.03.2001  US 273100**

(43) Date of publication of application:
**17.07.2002  Bulletin 2002/29**

(73) Proprietor: **SAMSUNG ELECTRONICS CO., LTD.**
**Suwon-si,**
**Gyeonggi-do 442-742 (KR)**

(72) Inventors:
• **Kim, Yeong-taeg**
**Irvine, CA 92618 (US)**
• **Kim, Shin-haeng**
**Paldal-gu,**
**Suwon-si,**
**Gyeonggi-do (KR)**

(74) Representative: **Walaski, Jan Filip et al**
**Venner Shipley LLP**
**20 Little Britain**
**London**
**EC1A 7DH (GB)**

(56) References cited:
**EP-A- 0 830 018**     **EP-A2- 0 395 263**
**EP-A2- 0 690 617**    **US-A- 5 602 591**
**US-A- 5 959 681**     **US-A- 6 014 182**
**US-A- 6 037 986**

• **TERO KOIVUNEN: "MOTION DETECTION OF AN INTERLACED VIDEO SIGNAL", , vol. 40, no. 3, 1 August 1994 (1994-08-01) , pages 753-759, XP000471245,**

**Description**

The present invention relates to a method of detecting motion in an interlaced video signal, the method comprising receiving a series of video frames; and for each frame, determining a difference value for the difference between each of its pixels and corresponding pixels in the preceding frame, if any, and an apparatus therefor.

Since different digital television (DTV) standards have been adopted in different parts of the world, it hs become desirable to employ video format conversion units in digital televisions. The ATSC DTV standard system of North America, for example, adopted 1080x1920 interlaced video, 720x1280 progressive video, 720x480 interlaced and progressive video, and so on, as its standard video formats for digital TV broadcasting.

Video format conversion refers to a signal processing operation in which an incoming video format is converted to a different output video format so that the output video can be properly displayed on a displaying device such as a monitor, FLCD, or a plasma display, which has a fixed resolution.

Video format conversion systems are of significant importance since the conversion can directly affect the visual quality of the video of a DTV receiver. Fundamentally, the video format conversion operation requires advanced algorithms for multi-rate system design, poly-phase filter design and interlaced-to-progressive scanning rate conversion or simply deinterlacing. Deinterlacing is an operation that doubles the vertical scanning rate of the interlaced video signal.

Interlaced video comprises a sequence of separately arriving fields, such as A1, A2, A3, etc., where A1 and A3 are top images and A2 being a bottom image. The top and bottom images are also known as the odd and even fields. The most popular systems currently in use, namely NTSC, PAL, and SECAM are two-field systems, where two consecutive fields (such as the top field A1 and the bottom field A2) make up a frame. Each scanned field contains, i.e., updates, every other line of a corresponding frame and the number of lines in the frame is twice the number of lines in each of the fields. Typically, the first field of a frame is identified with odd-numbered lines and the second field is identified with even-numbered lines. The fields are scanned onto the display screen one after the other at a defined frequency.

By way of example, NTSC operates at 30 frames (60 fields of interlaced video) per second, with 525 lines per frame, and a horizontal to vertical aspect ratio of 4:3. The frame difference, therefore, is the difference between two fields having the same types (top or bottom) such as A1 and A3, or A2 and A4. PAL and SECAM operates at 25 frames per second, with 625 lines per image, and the same aspect ratio of 4:3. As noted, the interlacing in all of these systems is 2:1, i.e., two fields per frame. The primary reason for the interlacing of the lines between the fields is to reduce flicker in the display. An image that is updated, say, only 30 times a second would allow the human eye to perceive the scanning, because the image information would already start to fade before the next image is scanned onto the screen. When two fields are used, and each contains half of the information, the scanning rate in effect is raised to 60 Hz, and the human eye no longer perceives any flicker.

Deinterlacing refers to the filling of unavailable lines in each of the fields A1, A2, A3, and so on. As a result of deinterlacing, a 60 Hz field sequence (of interlaced video fields) becomes a 60 Hz progressive sequence.

Interlaced video is subject to several intrinsic drawbacks, referred to as artifacts. These include serrated lines that are observed when there is motion between fields, line flickering, raster line visibility, and field flickering. These also apply to DTV (digital TV) receivers. Historically, deinterlacing algorithms have been developed to enhance the video quality of NTSC TV receivers by reducing these intrinsic annoying artifacts of the interlaced video signal. Besides, elaborate deinterlacing algorithms utilizing motion detection or motion compensation provide excellent methods of doubling the vertical scanning rate of the interlaced video signal especially for stationary (motionless) objects in the video signal.

The present invention therefore also relates to the motion detection based deinterlacing operation that can be used for analogue and digital TV receivers.

The state of the art includes a variety of deinterlacing algorithms, each having been exploited and studied comprehensively by many researchers during the last decade. Deinterlacing algorithms can be categorized into two classes, namely, 2-D (spatial) deinterlacing algorithms and 3-D (spatio-temporal) deinterlacing algorithms depending on the use of motion information embedded in a video sequence. Combined spatial and temporal 3-D deinterlacing algorithms based on a motion detection give more pleasing performance than 2-D deinterlacing algorithms. The key point of a 3-D de-interlacing algorithm is how to precisely detect motion in the interlaced video signals. The publications in the following list disclose some of the applicable de-interlacing methods. They may be categorized as follows:

[1] Simple line doubling scheme, vertical filtering, vertical edge controlled interpolation method disclosed in the IEEE Transactions on Consumers Electronics, pp. 279-89, August 1989 by D.I. Hentschei;

[2] Edge direction dependent de-interlacing method disclosed in the Proc. of the Int. Workshop on HDTV, 1994, by D. Bagni, R Lancini, and S. Tubaro;

[3] Nonlinear interpolation methods based on:

a weighted median filter disclosed in the Proc. of the IEEE ISCAS, pp. 433-36, Portland, USA, May 1989, by J. Juhola, A. Nieminen, J. Sal, and Y. Neuvo,
FIR median hybrid interpolation disclosed in Pro. Of SPIE's Visual Communications and Image Processing, Lausanne, Switzerland, October 1990, 00. 125-32 by A. Lehtonen and M. Renfors,
a complementary median filter disclosed in Proc. of the Int. Workshop on HDTV, 1994 by H. Blume, I. Schwoerer, and K. Zygis,

[4] A motion adaptive method disclosed in IEEE Transactions on Consumer Electronics, pp. 110-114, May 1990 by C. Markhauser.
More recently, a new motion-detection-based de-interlacing method has been described in the following two patents:
[5] US-A-5943099
This patent discloses an interlaced-to-progressive conversion device which includes a spatial interpolator that provides for spatial interpolation and a temporal interpolator that provides for temporal interpolation of an interlaced video input signal. The system reduces jitter and related artifacts by temporally or spatially interpolating the signals.
[6] US-A-5959681
In this patent, two separate field memories are utilized for detecting rapid motion and slow motion in an interlaced video sequence. An interlaced video signal is thereby converted into a progressive-scanned signal. Differences between spatial interpolation and temporal interpolation are used to determine whether the image is in motion. If the differences exceed certain defined thresholds, motion is determined. The thresholds are dynamically adapted during the process.

The core of the methods described in the aforementioned two patents is to determine a motion decision factor based on the frame difference signal and the sample correlation in the vertical direction. These methods provide a way of reducing the visual artifacts that can arise from false motion detection by utilizing sample correlation in the vertical direction where the value is to be interpolated. A common drawback of these methods, however, is that they do not provide a true motion detection method when there are high frequency components in the vertical direction. In other words, when there are high frequency components in the vertical direction, the methods described in the aforementioned patents will falsely determine that motion-containing pictures are being processed.

As a consequence, in many instances, these prior art processing methods do not provide for an increase in the vertical resolution even when no real motion is present between fields.

Furthermore, approaches for de-interlacing that explicitly refine absolute pixel differences between subsequent fields of identical parity by spatial filtering, temporal combining and threshold decisions in order to increase the reliability of binary motion decisions are known in the art.

'Motion detection of an interlaced video signal' in IEEE Transaction on Consumer Electronics, vol. 40, no. 3, August 1994, pages 753-759 discloses a binary motion detector that calculates absolute pixel differences between subsequent fields of the same parity, followed by temporal maximum detection across two fields, threshold comparison to derive a binary motion measure and spatial median filtering to come to a final pixel-wise binary motion measure.

EP 0 690 617 A2 computes absolute pixel differences between previous and next fields, spatial averages over such absolute differences, performs threshold comparison of averaged absolute differences and logical OR combination between fields to derive a binary pixel-wise motion measure.

A method according to the present invention is characterised by further processing said determined differences, said further processing including deriving a motion signal for each pixel in dependence on the determined difference for that pixel and the determined difference for neighbouring pixels.

Preferably, said further processing comprises low-pass filtering the determined difference value space comprising said difference values for each frame and said motion signals are derived from the filtered difference values for each pixel and the filtered difference values for neighbouring pixels.

Preferably, said further processing comprises comparing said filtered difference values with a reference to produce respective binary difference values and said motion signals are derived for each pixel from the result of ORing its binary difference value with those of said neighbouring pixels.

Preferably, a method according to the present invention includes low-pass filtering the space comprising the results of said ORing for a frame to produce said motion signals.

Said neighbouring pixels may be temporally or spatially neighbouring.

The present invention also provides an apparatus comprising means for performing each of the steps of a method according to the present invention.

Embodiments of the present invention, will now be described, by way of example, with reference to the accompanying, drawings in which:

Figure 1 is a diagrammatic view of two adjacent fields of a frame of an interlaced video signal;
Figure 2 is a diagrammatic illustration of three fields for illustrating the de-interlacing problem;

Figure 3 is a more detailed view illustrating the de-interlacing process;

Figure 4 is a block diagram illustrating the computation of a motion decision parameter; and

Figure 5 is a block diagram showing the computation of the motion decision parameter and the resultant mixing of the spatially and temporally interpolated signals in dependence on the motion decision.

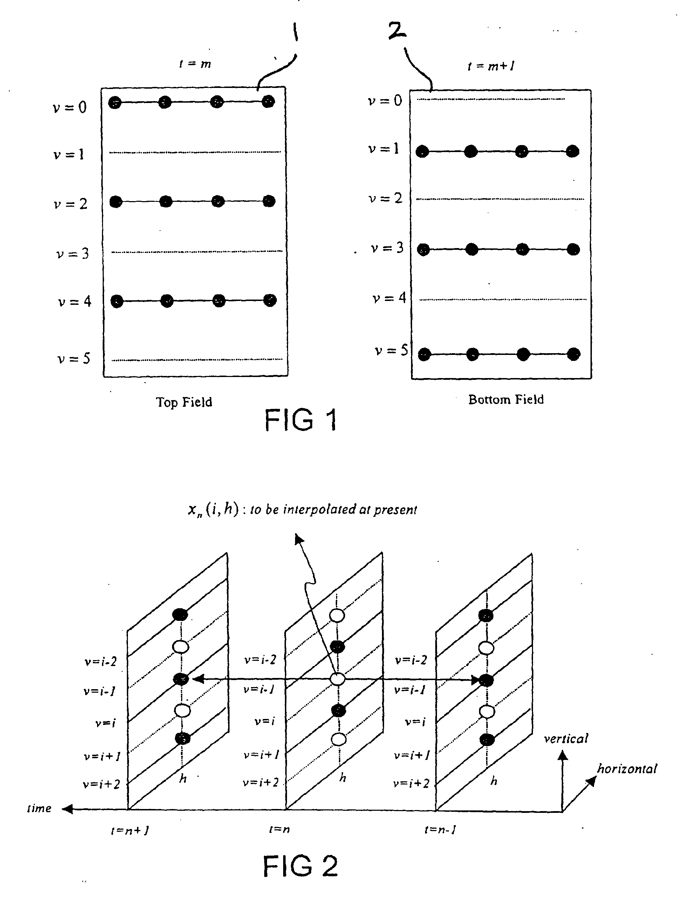

Referring to Figure 1, an interlaced video signal is a series of frames each including a plurality of fields. As noted above, all conventional systems utilize two fields per frame which are sequentially scanned. A top field 1 contains information regarding the first ($v = 0$), third ($v = 2$), fifth ($v = 4$), etc. lines, and a bottom field 2 contains information regarding the second ($v = 1$), fourth ($v = 3$), sixth ($v = 5$), etc. lines.

In order to systematically describe the de-interlacing problem and the methods of the present invention, let $x_n$ denote the incoming interlaced video field at a time instant $t = n$ and $x_n(v,h)$ denote the associated value of the video signal at the geometrical location $(v,h)$. The variable $v$ represents the vertical location and h represents horizontal location, in the cartesian co-ordinate system commonly used. By definition, the signal values of $x_n$ of the interlaced video signal are available only for the even lines ($v = 0,2,4,...$) if $x_n$ is the top field 1. Similarly, the signal values of $x_n$ are available only for the odd lines of $v$ ($v = 1,3,5,...$) if $x_n$ is the bottom field 2. Conversely, the signal values of $x_n$ are not available for odd lines if $x_n$ is a top field signal and the signal values of $x_n$ are not available for even lines if $x_n$ is a bottom field. Figure 1 shows the top field 1 scanned at $t = m$ and the bottom field 2 scanned at $t = m + 1$. Top and bottom fields are typically available in turn in the time axis, that is, pairs comprising top and bottom fields are used to make up frames.

The de-interlacing function can be defined as a process to reconstruct or interpolate the non-available signal values of each field. That is, the de-interlacing function is to reconstruct the signal values of $x_n$ at the odd lines ($v = 1,3,5,...$) for the top field $x_n$ and to reconstruct the signal values of $x_n$ at the even lines ($v = 0,2,4,...$) for the bottom field $x_n$.

For the simple description of the present invention, and to avoid any notational confusion in the disclosure, the de-interlacing problem will be simplified as a process which reconstructs or interpolates the unavailable signal value of $x_n$ at the i$^{th}$ line where the signal values of the lines at $i\pm1$, $i\pm3$, $i\pm5,...$ are available. More simply de-interlacing is to interpolate the value of $x_n(i,h)$, which was not originally available. It must be noted that, since $x_{n-1}$ and $x_{n+1}$ have a different sampling phase from $x_n$, the signal values of $x_{n-1}(i,h)$ and $x_{n+1}(i,h)$ are available, which is why motion detection can be incorporated with the de-interlacing function. This relationship is depicted in Figure 2, where dotted lines (and white circles) represent "no data available" and solid lines (and black circles) represent "available data."

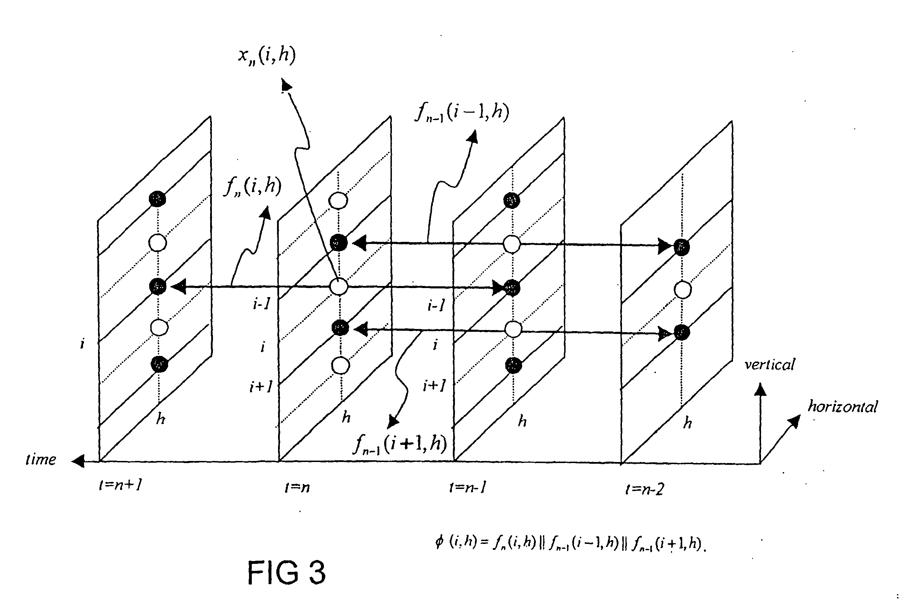

Referring now to Figures 3, 4 and 5, there is illustrated a method of estimating a motion decision parameter $m_n(i,h)$. Fundamentally, $m_n(i,h)$ is estimated from the incoming interlaced video sequence and associated with the point-to-point degree of motion in the interlaced video sequence. The importance or the usefulness of estimating $m_n(i,h)$ can be easily understood from Figures 2 and 3. Suppose that precise motion detection information is available when we interpolate $x_n(i,h)$ and suppose there is no motion at the spatial location $(i,h)$, then the best interpolation for $x_n(i,h)$ is to use the value of $x_{n-1}(i,h)$. This follows logically from the fact that no motion is introduced between $t = n - 1$ and $t = n + 1$ at the spatial location $(i,h)$, which very strongly implies that the value of $x_n(i,h)$ would be close to the value of $x_{n-1}(i,h)$. The usage of the motion decision parameter of the present invention is also to utilize the motion information for de-interlacing to properly mix the temporal information, which will be described later.

First, the frame difference signal $D_n$ is computed by taking the difference between the fields in one frame interval as

$$D_n = \left| x_{n+1} - x_{n-1} \right|$$

which is associated with the scene change that occurred between the fields $x_{n+1}$ and $x_{n-1}$. The frame difference signal is then low-pass filtered to form

$$d_n = LPF(D_n)$$

where LPF() represents a low-pass filtering process. The M x N kernel, $W_{MxN}$, in general, of the low-pass filter LPF(), can be expressed as

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

where ($w_{11}$, ..., $w_{MN}$) represents a set of predetermined coefficients. It should be noted that the characteristic of the low-pass filter can be all-pass filter depending on the choice of the kernel $W_{MxN}$. That is, if the kernel is set as $M = N = 1$, and $w_{11}=1$, the LPF () becomes an all-pass filter and, thus, $d_n = D_n$.

Next, a point-wise motion detection signal is computed using

$$f_n (i, h) = T_k (d_n (i, h)) \quad (1)$$

where $T_K()$ denotes a threshold function represented by

$$T_k(y) = \begin{cases} 1, \text{if } y \geq K \\ 0, \text{otherwise} \end{cases}$$

in which K is a positive constant value. Then the region-wise motion detection signal is computed from the point-wise motion detection signals which logically combines the signals according to:

$$\phi_n (i,h) = f_n (i,h) \| f_{n-1} (i-1,h) \| f_{n-1} (i+1,h)$$

where $f_{n-1}(i-1,h)$ denotes the one-field delayed motion detection signal described in (1) and where the notation $\|$ denotes the logical OR operation.

Finally, the region-wise motion detection signal is low-pass filtered to form the motion decision parameter $m_n (i,h)$, namely:

$$m_n (i,h) = \sum_{p=-a}^{b} \sum_{q=-c}^{d} \phi_n (i+2 \times p, h+2 \times q) \cdot \alpha_{p,q} \quad (2)$$

where a,b,c,d $\geq 0$, and $\alpha_{p,q}$ represents a set of normalized (i.e. $\sum_{p=-a}^{b} \sum_{q=-c}^{d} \alpha_{p,q}$), predetermined coefficients of a low-pass filter. For instance, the kernel of the low-pass filter used in (2) can be

$$[\alpha_{p,q}{}'s] = \begin{bmatrix} 0 & 1/8 & 0 \\ 1/8 & 4/8 & 1/8 \\ 0 & 1/8 & 0 \end{bmatrix}$$

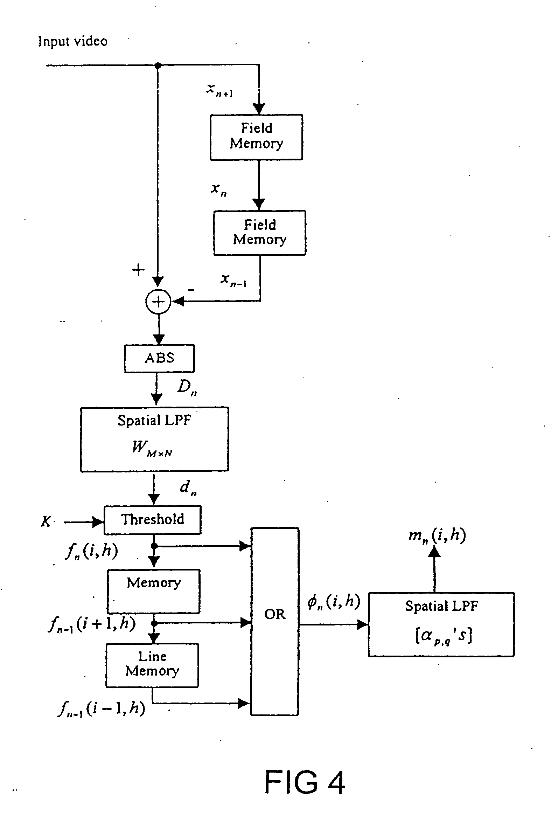

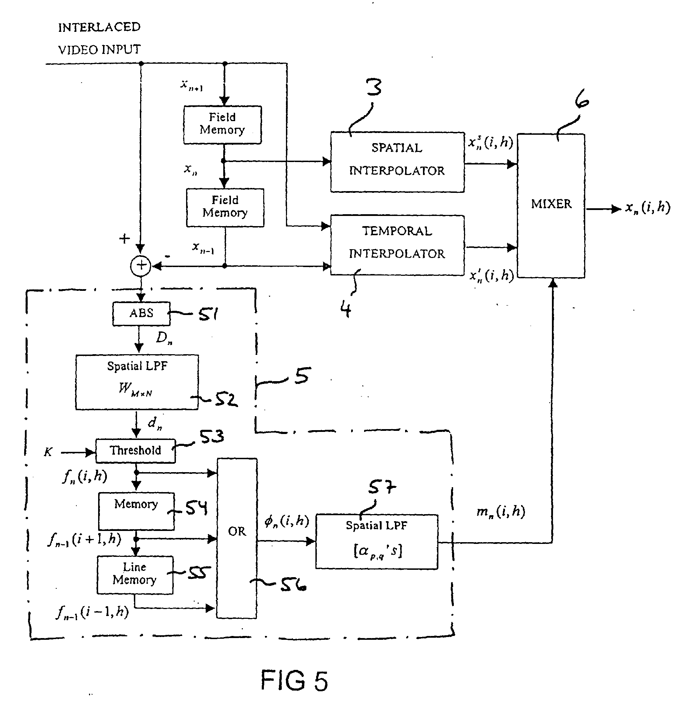

Figure 4 illustrates the computation of the motion decision parameter $m_n(i,h)$ as described above. The computed motion decision parameter $m_n(i,h)$ is then used to mix a spatially interpolated signal and a temporally interpolated signal, as illustrated in Figure 5.

Referring to Figure 5, an interpolation apparatus comprises a spatial interpolator 3, a temporal interpolator 4, a motion decision processor 5, and a mixer 6. The decision processor 5 corresponds to Figure 4 and includes, in the signal flow direction, an absolute value former 51 which defines the absolute difference parameter $D_n$; a first low-pass filter LPF 52 in which the filtering function $W_{MxN}$ with the MxN kernel is set; an adjustable or fixed threshold member 53 which, in a preferred embodiment, is implemented by a controlled comparator; a buffer memory 54 and a further line memory 55 are connected to an OR logic circuit 56 in which the function signal $(_n(i,h)$ is formed as described above; finally, the motion detection signal $m_n(i,h)$ is formed by low pass filtering in a spatial low-pass filter LPF 57. The output of the low-pass filter 57 is connected so that the motion detection signal $m_n(i,h)$ is supplied to a control input of the mixer 6.

The spatial interpolator 3 spatially interpolates the value of $x_n(i,h)$ by using a predetermined algorithm. The temporal interpolator 4 temporally interpolates the value of $x_n(i,h)$ by using a predetermined algorithm. The motion decision value $m_n(i,h)$ computed in the motion decision processor 5, as described above, represents the degree of motion at the interpolation location $(i,h)$. Conceptually, the value of the motion decision parameter will be bounded as 0 ( $m_n(i,h)$ (1 where the extreme $m_n(i,h) = 0$ implies "no motion" and $m_n(i,h) = 1$ implies "motion". The mixer mixes the output signal of the spatial interpolator and the output signal of the temporal interpolator in accordance with the motion decision value. Taking $x_n^s(i,h)$ and $x_n^t(i,h)$ the output signal of the spatial interpolator and the output signal of the temporal interpolator, respectively, the output signal of the mixer, or, the interpolated signal is represented by

$$x_n(i,h) = (1 - m_n(i,h)) \cdot x_n^t(i,h) + m_n(i,h) \cdot x_n^s(i,h)$$

It is clear that $x_n(i,h) = x_n^t(i,h)$ when $m_n(i,h)=0$ (no motion) and $x_n(i,h) = x_n^s(i,h)$ when $m_n(i,h)=1$ (motion).

It will be understood that it does not matter what kind of spatial interpolating algorithm (in the spatial interpolator 3) and what kind of temporal interpolating algorithm (in the temporal interpolator 4) are used for the interpolation. The present invention is only concerned with estimating the motion decision value $m_n(i,h)$ and with mixing a spatially interpolated signal and a temporally interpolated signal in accordance with the estimated motion decision value.

Specific information with regard to the interpolation of interlaced video signals and interlaced to progressive conversion is readily available to those of skill in the pertinent art.

Some examples of the spatially interpolated signal $x_n^s(i,h)$ are

$$x_n^s(i,h) = \frac{(x_n(i-1,h) + x_n(i+1,h))}{2}$$

which corresponds to a line average and

$$x_n^s(i,h) = x_n(i-1,h)$$

which corresponds to a method known as line doubling.

Also, some examples of temporally interpolated signal $x_n^t(i,h)$ )

$$x_n^t(i,h) = \frac{(x_{n+1}(i,h) + x_{n-1}(i,h))}{2}$$

and

$$x'_n(i,h) = x_{n-1}(i,h)$$

## Claims

1. In a system for converting interlaced video signals to progressive video signals, a method of computing a motion decision value, which comprises the following steps:

   inputting a video signal with an interlaced video sequence of fields;
   computing a frame difference signal for a first field from an absolute difference between a previous field and a next field in the video sequence and spatially low-pass filtering the frame difference signal;
   forming a binary point-wise motion detection signal by comparing points of the spatially low-pass filtered frame difference signal with a threshold value;
   computing a binary temporally combined motion detection signal by logically combining the point-wise motion detection signal with spatially corresponding point-wise motion detection signals for a second field delayed from the first field by one field in the video sequence;
   spatially low-pass filtering the binary temporally combined motion detection signal to form a non-binary motion decision value; and
   outputting the motion decision value for further processing in the video deinterlacing system.

2. The method according to claim 1, wherein the step of spatially low-pass filtering the frame difference signal prior to the step of forming the point-wise motion detection signal is defined by a low pass filter matrix

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

where $w_{11}, \ldots w_{MN}$ represent a set of predetermined coefficients.

3. The method according to claim 1, wherein the step of forming the point-wise motion detection signal comprises computing

$$f_n(i,h) = T_k(d_n(i,h))$$

where $f_n$ is the point-wise motion detection signal, $i$ and $h$ define a spatial location of the respective video signal value in a cartesian matrix, $T_K(-)$ denotes a threshold function represented as

$$T_k(y) = \begin{cases} 1, \text{if } y \geq K \\ 0, \text{otherwise} \end{cases}$$

in which $K$ is a positive constant, and $d_n(-)$ is the low-pass filtered frame difference signal.

4. The method according to claim 1, wherein the binary temporally combined motion detection signal is computed from the point-wise motion detection signal by logically combining the point-wise motion detection signal $f_N$ as

$$\phi_n(i,h) = f_n(i,h) \| f_{n-1}(i-1,h) \| f_{n-1}(i+1,h)$$

where $f_{n-1}(i\text{-}1,h)$ denotes the motion detection signal delayed by one field, the indices i and b define a spatial location of the respective video signal value in a cartesian matrix, and the notation $\|$ denotes a logical OR operation.

5. The method according to claim 1, wherein the binary temporally combined motion detection signal is spatially low-pass filtered to form the motion decision value $m_n(i,b)$ by:

$$m_n(i,h) = \sum_{p=-a}^{b} \sum_{q=-c}^{d} \phi_n(i+2\times p, h+2\times q)\cdot\alpha_{p,q}$$

where a,b,c,d $\geq$ 0, and $\alpha_{p,q}$ represents a set of normalized predetermined coefficients of a low pass filter.

6. The method according to claim 5, which comprises defining a kernel of the low pass filter as

$$\left[\alpha_{p,q}\text{'s}\right] = \begin{bmatrix} 0 & 1/8 & 0 \\ 1/8 & 4/8 & 1/8 \\ 0 & 1/8 & 0 \end{bmatrix}.$$

7. A method of processing interlaced video signals, which comprises:

spatially interpolating a value of the video signal at a given location from a video signal of at least one adjacent location in a given video field;
temporally interpolating the value of the video signal at the given location from a video signal at the same location in temporally adjacent video fields;
forming a motion decision value for the same location in accordance with claim 1; and
mixing an output signal for the video signal at the given location from the spatially interpolated signal and the temporally interpolated signal and weighting the output signal in accordance with the motion decision value.

8. The method according to claim 7, which comprises varying the motion decision value between 0 and 1 as a function of an estimate of the degree of motion at the given location and, upon estimating a high degree of motion, heavily weighting the output signal towards the spatially interpolated signal and, upon estimating a low degree of motion, heavily weighting the output signal towards the temporally interpolated signal.

9. The method according to claim 7, which comprises outputting the spatially interpolated signal as the output signal upon estimating a high degree of motion, and outputting the temporally interpolated signal as the output signal upon estimating a low degree of motion.

10. In a system for converting interlaced video signals to progressive video signals, an apparatus for computing a motion decision value, comprising:

an input for receiving a video signal with an interlaced video sequence;
difference forming means connected to said input for computing a frame difference signal from an absolute difference between a previous field and a next field of a current field to be deinterlaced;
means for spatially low-pass filtering the frame difference signal;
means for forming a binary point-wise motion detection signal from the frame difference signal by comparing points of the spatially low-pass filtered frame difference signal with a threshold value, and for computing a binary temporally combined motion detection signal by logically combining the point-wise motion detection signal for a first field with spatially corresponding point-wise motion detection signals for a second field delayed by one field from the first field in the input video sequence; and or
means for spatially low-pass filtering the binary temporally combined motion detection signal to form a non-binary motion decision value; and
means for outputting the motion decision value for further processing in the video deinterlacing system.

**11.** The apparatus according to claim 10, wherein the means for spatially low-pass filtering the frame difference signal is a low-pass filter programmed with a low pass filter matrix

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

where $w_{11}, \ldots w_{MN}$ represent a set of predetermined coefficients.

**12.** The apparatus according to claim 10, which comprises a logic member programmed to compute the motion decision value from the point-wise motion detection signal by logically combining the point-wise motion detection signal $f_N$ as

$$\phi_n(i,h) = f_n(i,h) \| f_{n-1}(i-1,h) \| f_{n-1}(i+1,h)$$

where $f_{n-1}(i\text{-}1,h)$ denotes the motion detection signal delayed by one field, the indices i and $h$ define a spatial location of the respective video signal value in a cartesian matrix, and the notation $\|$ denotes a logical OR operation.

**13.** The apparatus according to claim 10, wherein said low-pass spatial filter is programmed to filter the binary temporally combined motion detection signal to form the motion decision value $m_n(i,h)$ by:

$$m_n(i,h) = \sum_{p=-a}^{b} \sum_{q=-c}^{d} \phi_n(i+2 \times p, h+2 \times q) \cdot \alpha_{p,q}$$

where a,b,c,d $\geq$ 0, and $\alpha_{p,q}$ represents a set of normalized predetermined coefficients of a low pass filter.

**14.** The apparatus according to claim 13, wherein said low-pass filter is defined with a kernel

$$[\alpha_{p,q}'s] = \begin{bmatrix} 0 & 1/8 & 0 \\ 1/8 & 4/8 & 1/8 \\ 0 & 1/8 & 0 \end{bmatrix}$$

**15.** An apparatus of processing interlaced video signals, which comprises:

an input for receiving a video signal with an interlaced video sequence of fields;
a spatial interpolator connected to said input and configured to spatially interpolate a value of the video signal at a given location from a video signal of at least one adjacent location in a given video field;
a temporal interpolator connected to said input in parallel with said spatial interpolator for temporally interpolating the value of the video signal at the given location from a video signal at the same location in temporally adjacent video fields; and
a computing apparatus according to claim 10 connected to said input and in parallel with said spatial interpolator and said temporal interpolator for forming a motion decision value for the same location; and
a mixer connected to receive an output signal from each of said spatial interpolator, said temporal interpolator, and said computing apparatus, said mixer being configured to mix an output signal for the video signal at the given location from the spatially interpolated signal and the temporally interpolated signal in dependence on the motion decision value output by said computing apparatus.

**Patentansprüche**

1. Verfahren, in einem System zum Umwandeln von Zeilensprung-Videosignalen in progressive Videosignale, zum Berechnen eines Bewegungsentscheidungswerts, das die folgenden Schritte umfasst:

   Eingeben eines Videosignals mit einer Zeilensprung-Videosequenz von Feldern;
   Berechnen eines Rahmendifferenzsignals für ein erstes Feld aus einer absoluten Differenz zwischen einem vorherigen Feld und einem nächsten Feld in der Videosequenz und räumliches Tiefpassfiltern des Rahmendifferenzsignals;
   Bilden eines binären punktweisen Bewegungserkennungssignals durch Vergleichen von Punkten des räumlich tiefpassgefilterten Rahmendifferenzsignals mit einem Schwellenwert;
   Berechnen eines binären, zeitlich kombinierten Bewegungserkennungssignals durch logisches Kombinieren des punktweisen Bewegungserkennungssignals mit räumlich korrespondierenden punktweisen Bewegungserkennungssignalen für ein zweites Feld, das gegenüber dem ersten Feld um ein Feld in der Videosequenz verzögert ist;
   räumliches Tiefpassfiltern des binären, zeitlich kombinierten Bewegungserkennungssignals, um einen nichtbinären Bewegungsentscheidungswert zu bilden; und
   Ausgeben des Bewegungsentscheidungswerts für weitere Verarbeitung in dem Video-Deinterlacing-System.

2. Verfahren nach Anspruch 1, wobei der Schritt zum räumlichen Tiefpassfiltern des Rahmendifferenzsignals vor dem Schritt zum Bilden des punktweisen Bewegungserkennungssignals definiert ist durch eine Tiefpassfiltermatrix

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

wobei $W_{11}, ... W_{MN}$ einen Satz im Voraus bestimmter Koeffizienten repräsentieren.

3. Verfahren nach Anspruch 1, wobei der Schritt zum Bilden des punktweisen Bewegungserkennungssignals umfasst,

$$f_n(i, h) = T_k(d_n(i, h))$$

zu berechnen, wobei $f_n$ das punktweise Bewegungserkennungssignal ist, $i$ und $h$ eine räumliche Position des jeweiligen Videosignalwerts in einer kartesischen Matrix definieren, $T_K(-)$ eine Schwellenwertfunktion bezeichnet, repräsentiert als

$$T_k(y) = \begin{cases} 1, & \text{wenn } y \geq K \\ 0, & \text{anderenfalls} \end{cases}$$

wobei $K$ eine positive Konstante ist und $d_n(-)$ das tiefpassgefilterte Rahmendifferenzsignal ist.

4. Verfahren nach Anspruch 1, wobei das binäre, zeitlich kombinierte Bewegungserkennungssignal aus dem punktweisen Bewegungserkennungssignal berechnet wird durch logisches Kombinieren des punktweisen Bewegungs-erkennungssignals $f_n$ als

$$\phi_n(i,h) = f_n(i,h) \| f_{n-1}(i-1,h) \| f_{n-1}(i+1,h)$$

wobei $f_{n-1}(i\text{-}1,h)$ das um ein Feld verzögerte Bewegungserkennungssignal bezeichnet, die Indices $i$ und $h$ eine räumliche Position des jeweiligen Videosignalwerts in einer kartesischen Matrix definieren und die Bezeichnung $\|$ eine logische ODER-Operation bezeichnet.

5. Verfahren nach Anspruch 1, wobei das binäre, zeitlich kombinierte Bewegungserkennungssignal räumlich tiefpassgefiltert wird, um den Bewegungsentscheidungswert $m_n(i,h)$ zu bilden durch:

$$m_n(i,h) = \sum_{p=-a}^{b} \sum_{q=-c}^{d} \phi_n(i+2\times p, h+2\times q) \cdot \alpha_{p,q}$$

wobei a, b, c, d $\geq$ 0 sind und $\alpha_{p,q}$ einen Satz normalisierter, im Voraus bestimmter Koeffizienten eines Tiefpassfilters repräsentiert.

6. Verfahren nach Anspruch 5, das umfasst, einen Kern des Tiefpassfilters zu definieren als

$$[\alpha_{p,q} \text{'s}] = \begin{bmatrix} 0 & 1/8 & 0 \\ 1/8 & 4/8 & 1/8 \\ 0 & 1/8 & 0 \end{bmatrix}.$$

7. Verfahren zum Verarbeiten von Zeilensprung-Videosignalen, das umfasst:

räumliches Interpolieren eines Werts des Videosignals an einer gegebenen Position aus einem Videosignal mindestens einer angrenzenden Position in einem gegebenen Videofeld;
zeitliches Interpolieren des Werts des Videosignals an der gegebenen Position aus einem Videosignal an derselben Position in zeitlich angrenzenden Videofeldern;
Bilden eines Bewegungsentscheidungswerts für dieselbe Position gemäß Anspruch 1; und
Mischen eines Ausgangssignals für das Videosignal an der gegebenen Position aus dem räumlich interpolierten Signal und dem zeitlich interpolierten Signal und Gewichten des Ausgangssignals gemäß dem Bewegungsentscheidungswert.

8. Verfahren nach Anspruch 7, umfassend Verändern des Bewegungsentscheidungswerts zwischen 0 und 1 als eine Funktion einer Schätzung des Bewegungsausmaßes an der gegebenen Position und, nach Schätzung eines hohen Bewegungsausmaßes, starkes Gewichten des Ausgangssignals hin zu dem räumlich interpolierten Signal und, nach Schätzung eines niedrigen Bewegungsausmaßes, starkes Gewichten des Ausgangssignals hin zu dem zeitlich interpolierten Signal.

9. Verfahren nach Anspruch 7, umfassend Ausgeben des räumlich interpolierten Signals als das Ausgangssignal nach Schätzung eines hohen Bewegungsausmaßes und Ausgeben des zeitlich interpolierten Signals als das Ausgangssignal nach Schätzung eines niedrigen Bewegungsausmaßes.

10. Vorrichtung, in einem System zum Umwandeln von Zeilensprung-Videosignalen in progressive Videosignale, zum Berechnen eines Bewegungsentscheidungswerts, umfassend:

einen Eingang zum Empfangen eines Videosignals mit einer Zeilensprung-Videosequenz;
Differenzbildungsmittel, verbunden mit dem Eingang, zum Berechnen eines Rahmendifferenzsignals aus einer absoluten Differenz zwischen einem vorherigen Feld und einem nächsten Feld eines gegenwärtigen Felds, das zu deinterlacen ist;

Mittel zum räumlichen Tiefpassfiltern des Rahmendifferenzsignals;

Mittel zum Bilden eines binären punktweisen Bewegungserkennungssignals aus dem Rahmendifferenzsignal durch Vergleichen von Punkten des räumlich tiefpassgefilterten Rahmendifferenzsignals mit einem Schwellenwert und zum Berechnen eines binären, zeitlich kombinierten Bewegungserkennungssignals durch logisches Kombinieren des punktweisen Bewegungserkennungssignals für ein erstes Feld mit räumlich korrespondierenden punktweisen Bewegungserkennungssignalen für ein zweites Feld, das gegenüber dem ersten Feld um ein Feld in der Videosequenz verzögert ist; und

Mittel zum räumlichen Tiefpassfiltern des binären, zeitlich kombinierten Bewegungserkennungssignals, um einen nichtbinären Bewegungsentscheidungswert zu bilden; und

Mittel zum Ausgeben des Bewegungsentscheidungswerts für weitere Verarbeitung in dem Video-Deinterlacing-System.

**11.** Vorrichtung nach Anspruch 10, wobei das Mittel zum räumlichen Tiefpassfiltern des Rahmendifferenzsignals ein Tiefpassfilter ist, programmiert mit einer Tiefpassfiltermatrix

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

wobei $W_{11}, \ldots W_{MN}$ einen Satz im Voraus bestimmter Koeffizienten repräsentieren.

**12.** Vorrichtung nach Anspruch 10, umfassend ein logisches Glied, das programmiert ist zum Berechnen des Bewegungsentscheidungswerts aus dem punktweisen Bewegungserkennungssignal durch logisches Kombinieren des punktweisen Bewegungserkennungssignals $f_n$ als

$$\phi_n(i,h) = f_n(i,h) \| f_{n-1}(i-1,h) \| f_{n-1}(i+1,h)$$

wobei $f_{n-1}(i$-$1,h)$ das um ein Feld verzögerte Bewegungserkennungssignal bezeichnet, die Indices $i$ und $h$ eine räumliche Position des jeweiligen Videosignalwerts in einer kartesischen Matrix definieren und die Bezeichnung $\|$ eine logische ODER-Operation bezeichnet.

**13.** Vorrichtung nach Anspruch 10, wobei der Tiefpass-Raumfilter programmiert ist zum Filtern des binären, zeitlich kombinierten Bewegungserkennungssignals, um den Bewegungsentscheidungswert $m_n(i,h)$ zu bilden durch:

$$m_n(i,h) = \sum_{p=-a}^{b} \sum_{q=-c}^{d} \phi_n(i+2 \times p, h + 2 \times q) \cdot \alpha_{p,q}$$

wobei a, b, c, d $\geq$ 0 sind und $\alpha_{p,q}$ einen Satz normalisierter, im Voraus bestimmter Koeffizienten eines Tiefpassfilters repräsentiert.

**14.** Vorrichtung nach Anspruch 13, wobei der Tiefpassfilter definiert ist mit einem Kern

$$\left[\alpha_{p,q}'s\right] = \begin{bmatrix} 0 & 1/8 & 0 \\ 1/8 & 4/8 & 1/8 \\ 0 & 1/8 & 0 \end{bmatrix}$$

**15.** Vorrichtung zum Verarbeiten von Zeilensprung-Videosignalen, umfassend:

einen Eingang zum Empfangen eines Videosignals mit einer Zeilensprung-Videosequenz von Feldern;
einen räumlichen Interpolator, der mit dem Eingang verbunden ist und konfiguriert ist zum räumlichen Interpolieren eines Werts des Videosignals an einer gegebenen Position aus einem Videosignal mindestens einer angrenzenden Position in einem gegebenen Videofeld;
einen zeitlichen Interpolator, der parallel mit dem räumlichen Interpolator mit dem Eingang verbunden ist, zum zeitlichen Interpolieren des Werts des Videosignals an der gegebenen Position aus einem Videosignal an derselben Position in zeitlich angrenzenden Videofeldern; und
eine Berechnungsvorrichtung nach Anspruch 10, die mit dem Eingang und parallel mit dem räumlichen Interpolator und dem zeitlichen Interpolator verbunden ist, zum Bilden eines Bewegungsentscheidungswerts für dieselbe Position; und
einen Mischer, der verbunden ist zum Empfangen eines Ausgangssignals von jedem des räumlichen Interpolators, des zeitlichen Interpolators und der Berechnungsvorrichtung, wobei der Mischer konfiguriert ist zum Mischen eines Ausgangssignals für das Videosignal an der gegebenen Position aus dem räumlich interpolierten Signal und dem zeitlich interpolierten Signal in Abhängigkeit von dem Bewegungsentscheidungswert, der von der Berechnungsvorrichtung ausgegeben wird.

**Revendications**

**1.** Procédé de calcul d'une valeur de décision de mouvement, dans un système de conversion de signaux vidéo entrelacés en signaux vidéo progressifs, comprenant les étapes suivante :

entrée d'un signal vidéo à séquence vidéo entrelacée de trames ;
calcul d'un signal de différence d'image pour une première trame à partir d'une différence absolue entre une trame précédente et une trame suivante dans la séquence vidéo et filtrage passe-bas spatial du signal de différence d'image ;
formation d'un signal de détection de mouvement par points binaire en comparant des points du signal de différence d'image filtré en passe-bas spatialement à une valeur de seuil ;
calcul d'un signal de détection de mouvement combiné temporellement binaire en combinant logiquement le signal de détection de mouvement par points à des signaux de détection de mouvement par points correspondant spatialement d'une deuxième trame retardée par rapport à la première trame par une trame dans la séquence vidéo ;
filtrage passe-bas spatial du signal de détection de mouvement combiné temporellement binaire afin de former une valeur de décision de mouvement non binaire ; et
production en sortie de la valeur de décision de mouvement en vue de son traitement ultérieur dans le système de désentrelacement vidéo.

**2.** Procédé selon la revendication 1, dans lequel l'étape de filtrage passe-bas spatial du signal de différence d'image avant l'étape de formation du signal de détection de mouvement par points est définie par une matrice de filtre passe-bas

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

où $w_{11}..., w_{MN}$ représente un ensemble de coefficients prédéterminés.

3. Procédé selon la revendication 1, dans lequel l'étape de formation du signal de détection de mouvement par points comprend le calcul de

$$f_n(i, h) = T_k(d_n(i, h))$$

où $f_n$ est le signal de détection de mouvement par points, $i$ et $h$ définissent un emplacement spatial de la valeur de signal vidéo respective dans une matrice cartésienne, $T_K(-)$ désigne une fonction de seuil représentée par

$$T_k(y) = \begin{cases} 1, \text{ si } y \geq K \\ 0, \text{ autrement} \end{cases}$$

où $K$ est une constante positive, et $d_n(-)$ est le signal de différence d'image filtré en passe-bas.

4. Procédé selon la revendication 1, dans lequel le signal de détection de mouvement combiné temporellement binaire est calculé à partir du signal de détection de mouvement par points en combinant logiquement le signal de détection de mouvement par points $f_n$ selon

$$\phi_n(i, h) = f_n(i, h) \| f_{n-1}(i-1, h) \| f_{n-1}(i+1, h)$$

où $f_{n-1}(i-1, h)$ désigne le signal de détection de mouvement retardé par une trame, les indices $i$ et $h$ définissent un emplacement spatial de la valeur de signal vidéo respective dans une matrice cartésienne, et la notation $\|$ désigne une opération OU logique.

5. Procédé selon la revendication 1, dans lequel le signal de détection de mouvement combiné temporellement binaire est filtré en passe-bas spatialement afin de former la valeur de décision de mouvement $m_n(i,h)$ selon:

$$m_n(i,h) = \sum_{p=-a}^{b} \sum_{q=-c}^{d} \phi_n(i + 2 \times p, h + 2 \times q) \cdot \alpha_{p,q}$$

où a, b, c, d $\geq 0$, et $\alpha_{p,q}$ représente un ensemble de coefficients prédéterminés normalisés d'un filtre passe-bas.

6. Procédé selon la revendication 5, lequel comprend la définition d'un noyau du filtre passe-bas selon

$$[\alpha_{p,q}'s] = \begin{bmatrix} 0 & 1/8 & 0 \\ 1/8 & 4/8 & 1/8 \\ 0 & 1/8 & 0 \end{bmatrix}.$$

7. Procédé de traitement de signaux vidéo entrelacés, lequel comprend :

l'interpolation spatiale d'une valeur du signal vidéo à un emplacement donné à partir d'un signal vidéo d'au moins un emplacement adjacent dans une trame vidéo donnée ;
l'interpolation temporelle de la valeur du signal vidéo à l'emplacement donné à partir d'un signal vidéo au même emplacement dans des trames vidéo temporellement adjacentes ;

la formation d'une valeur de décision de mouvement pour le même emplacement selon la revendication 1 ; et le mixage d'un signal de sortie du signal vidéo à l'emplacement donné à partir du signal interpolé spatialement et du signal interpolé temporellement et la pondération du signal de sortie en fonction de la valeur de décision de mouvement.

8. Procédé selon la revendication 7, lequel comprend la variation de la valeur de décision de mouvement entre 0 et 1 en fonction d'une estimation du degré de mouvement à l'emplacement donné et, à l'estimation d'un haut degré de mouvement, la pondération forte du signal de sortie vers le signal interpolé spatialement, et, à l'estimation d'un bas degré de mouvement, la pondération forte du signal de sortie vers le signal interpolé temporellement.

9. Procédé selon la revendication 7, lequel comprend la production en sortie du signal interpolé spatialement comme signal de sortie à l'estimation d'un haut degré de mouvement, et la production en sortie du signal interpolé temporellement comme signal de sortie à l'estimation d'un bas degré de mouvement.

10. Appareil de calcul d'une valeur de décision de mouvement, dans un système de conversion de signaux vidéo entrelacés en signaux vidéo progressifs, comprenant :

une entrée pour recevoir un signal vidéo à séquence vidéo entrelacée ;
un moyen de formation de différence connecté à ladite entrée pour calculer un signal de différence d'image à partir d'une différence absolue entre une trame précédente et une trame suivante d'une trame courante à désentrelacer ;
un moyen de filtrage passe-bas spatial du signal de différence d'image ;
un moyen de formation d'un signal de détection de mouvement par points binaire à partir du signal de différence de trame en comparant des points du signal de différence d'image filtré en passe-bas spatialement à une valeur de seuil, et de calcul d'un signal de détection de mouvement combiné temporellement binaire en combinant logiquement le signal de détection de mouvement par points d'une première trame à des signaux de détection de mouvement par points correspondant spatialement d'une deuxième trame retardée par rapport à la première trame par une trame dans la séquence vidéo entrée ; et
un moyen de filtrage passe-bas spatial du signal de détection de mouvement combiné temporellement binaire afin de former une valeur de décision de mouvement non binaire ; et
un moyen de production en sortie de la valeur de décision de mouvement en vue de son traitement ultérieur dans le système de désentrelacement vidéo.

11. Appareil selon la revendication 10, dans lequel le moyen de filtrage passe-bas spatial du signal de différence d'image est un filtre passe-bas programmé avec une matrice de filtre passe-bas

$$W_{M \times N} = \begin{bmatrix} w_{11} & w_{12} & \cdots & w_{1N} \\ w_{21} & w_{22} & \cdots & w_{2N} \\ \vdots & \vdots & \ddots & \vdots \\ w_{M1} & w_{M2} & \cdots & w_{MN} \end{bmatrix}$$

où $w_{11}..., w_{MN}$ représente un ensemble de coefficients prédéterminés.

12. Appareil selon la revendication 10, lequel comprend un élément logique programmé pour calculer la valeur de décision de mouvement à partir du signal de détection de mouvement par points en combinant logiquement le signal de détection de mouvement par points $f_n$ selon

$$\phi_n(i,h) = f_n(i,h) \| f_{n-1}(i-1,h) \| f_{n-1}(i+1,h)$$

où $f_{n-1}(i-1, h)$ désigne le signal de détection de mouvement retardé par une trame, les indices $i$ et $h$ définissent un emplacement spatial de la valeur de signal vidéo respective dans une matrice cartésienne, et la notation | | désigne une opération OU logique.

13. Appareil selon la revendication 10, dans lequel ledit filtre spatial passe-bas est programmé pour filtrer le signal de détection de mouvement combiné temporellement binaire afin de former la valeur de décision de mouvement $m_n(i,h)$ selon:

$$m_n(i,h) = \sum_{p=-a}^{b} \sum_{q=-c}^{d} \phi_n(i + 2 \times p, h + 2 \times q) \cdot \alpha_{p,q}$$

où a, b, c, d $\geq$ 0, et $\alpha_{p,q}$ représente un ensemble de coefficients prédéterminés normalisés d'un filtre passe-bas.

14. Appareil selon la revendication 13, dans lequel ledit filtre passe-bas est défini avec un noyau

$$\left[\alpha_{p,q}'s\right] = \begin{bmatrix} 0 & 1/8 & 0 \\ 1/8 & 4/8 & 1/8 \\ 0 & 1/8 & 0 \end{bmatrix}.$$

15. Appareil de traitement de signaux vidéo entrelacés, lequel comprend :

une entrée pour recevoir un signal vidéo à séquence vidéo entrelacée de trames ;
un interpolateur spatial connecté à ladite entrée et configuré pour interpoler spatialement une valeur du signal vidéo à un emplacement donné à partir d'un signal vidéo d'au moins un emplacement adjacent dans une trame vidéo donnée ;
un interpolateur temporel connecté à ladite entrée en parallèle audit interpolateur spatial pour interpoler temporellement la valeur du signal vidéo à l'emplacement donné à partir d'un signal vidéo au même emplacement dans des trames vidéo temporellement adjacentes ; et
un appareil de calcul selon la revendication 10 connecté à ladite entrée et en parallèle audit interpolateur spatial et audit interpolateur temporel afin de former une valeur de décision de mouvement pour le même emplacement ; et
un mélangeur connecté pour recevoir un signal de sortie depuis chacun dudit interpolateur spatial, dudit interpolateur temporel, et dudit appareil de calcul, ledit mélangeur étant configuré pour mixer un signal de sortie du signal vidéo à l'emplacement donné à partir du signal interpolé spatialement et du signal interpolé temporellement en fonction de la valeur de décision de mouvement produite en sortie par ledit appareil de calcul.

1

2

$t = m$

$t = m+1$

$v = 0$

$v = 1$

$v = 2$

$v = 3$

$v = 4$

$v = 5$

$v = 0$

$v = 1$

$v = 2$

$v = 3$

$v = 4$

$v = 5$

Top Field

Bottom Field

## FIG 1

$x_n(i, h)$ : to be interpolated at present

$v = i-2$

$v = i-1$

$v = i$

$v = i+1$

$v = i+2$

$v = i-2$

$v = i-1$

$v = i$

$v = i+1$

$v = i+2$

$v = i-2$

$v = i-1$

$v = i$

$v = i+1$

$v = i+2$

$h$

$h$

$h$

vertical

horizontal

time

$t = n+1$

$t = n$

$t = n-1$

## FIG 2

$$\phi\,(i,h) = f_n(i,h)\,\|\,f_{n-1}(i-1,h)\,\|\,f_{n-1}(i+1,h).$$

FIG 3

Input video

$x_{n+1}$

Field
Memory

$x_n$

Field
Memory

$+$

$-$  $x_{n-1}$

$\oplus$

ABS

$D_n$

Spatial LPF
$W_{M \times N}$

$d_n$

$K \longrightarrow$  Threshold

$f_n(i,h)$

Memory

$f_{n-1}(i+1,h)$

OR  $\phi_n(i,h)$

Line
Memory

$f_{n-1}(i-1,h)$

$m_n(i,h)$

Spatial LPF
$[\alpha_{p,q}\text{'s}]$

FIG 4

INTERLACED
VIDEO INPUT

$\ddot{x}_{n+1}$

Field
Memory

$x_n$

Field
Memory

$x_{n-1}$

3

SPATIAL
INTERPOLATOR

$x_n^s(i,h)$

6

MIXER

$x_n(i,h)$

TEMPORAL
INTERPOLATOR

$x_n'(i,h)$

4

+

−

ABS  51

$D_n$

Spatial LPF
$W_{M \times N}$  52

5

$d_n$

K → Threshold  53

$f_n(i,h)$

Memory  54

$f_{n-1}(i+1,h)$

OR

$\phi_n(i,h)$

57

Spatial LPF
$[\alpha_{p,q}'s]$

$m_n(i,h)$

Line
Memory  55

56

$f_{n-1}(i-1,h)$

FIG 5

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5943099 A
- US 5959681 A
- EP 0690617 A2

### Non-patent literature cited in the description

- **D.I. Hentschei.** *IEEE Transactions on Consumers Electronics,* August 1989, 279-89
- **J. Juhola ; A. Nieminen ; J. Sal ; Y. Neuvo.** *Proc. of the IEEE ISCAS,* May 1989, 433-36
- **A. Lehtonen ; M. Renfors.** *Pro. Of SPIE's Visual Communications and Image Processing,* October 1990
- **H. Blume ; I. Schwoerer ; K. Zygis.** *Proc. of the Int. Workshop on HDTV,* 1994
- **May 1990 ; C. Markhauser.** *IEEE Transactions on Consumer Electronics,* 110-114
- Motion detection of an interlaced video signal. *IEEE Transaction on Consumer Electronics,* August 1994, vol. 40 (3), 753-759